# EUROPEAN PATENT SPECIFICATION

(11) **EP 3 075 533 B1**
(45) Date of publication and mention of the grant of the patent: **21.02.2018**
(21) Application number: 14866753.8
(22) Date of filing: 31.10.2014
(51) Int. Cl.: B32B 27/08, B32B 27/30, B32B 27/36, G06F 3/041

(54) **TRANSPARENT RESIN LAMINATE**
TRANSPARENTER HARZSCHICHTSTOFF
STRATIFIÉ EN RÉSINE TRANSPARENTE

(30) Priority: 26.11.2013 JP 2013244251
(43) Date of publication of application: 05.10.2016
(73) Proprietor: Mitsubishi Gas Chemical Company, Inc., Tokyo 100-8324 (JP); MGC Filsheet Co., Ltd., Saitama 359-1164 (JP)
(72) Inventor: ONISHI Takeshi, Tokyo 125-8601 (JP); KAKINOKI Osamu, Tokyo 100-8324 (JP); NAKAYASU Yasuyoshi, Tokyo 125-8601 (JP); OZAWA Kishin, Toyonaka-shi Osaka 561-0823 (JP)
(74) Representative: Hoffmann Eitle
(86) International application number: PCT/JP2014/079075
(87) International publication number: WO 2015/079867

(56) References cited:
- JP-A- S55 102 614
- JP-A- 2008 268 913
- JP-A- 2010 167 659
- JP-A- 2014 198 454

## Description

### TECHNICAL FIELD

The present invention relates to a synthetic resin laminate, and specifically, to a synthetic resin laminate for use in transparent substrate materials or transparent protective materials, wherein the synthetic resin laminate has a polycarbonate-based base material layer and a resin layer comprising a specific styrene-based copolymer resin and a specific vinyl resin (i.e., a high hardness layer), and is excellent in terms of shape stability in a high-temperature or high-humidity environment, surface hardness, and/or heat resistance.

### BACKGROUND ART

A polycarbonate resin plate is excellent in terms of transparency, impact resistance and heat resistance, and thus, it is used for soundproof walls, carports, signboards, glazing materials, lighting apparatuses, etc. However, such a polycarbonate resin plate is disadvantageous in that it is easily damaged because of its low surface hardness, and thus, its intended use is limited.

Patent Literature 1 proposes a method of coating the surface of the plate with a UV-curable resin or the like, and a method of performing hard coating on a substrate, to which a polycarbonate resin and an acrylic resin have been co-extruded, in order to improve the above-mentioned disadvantage of the polycarbonate resin plate.

However, such a polycarbonate resin, on the surface of which hard coating has been performed, cannot satisfy a pencil hardness required, and thus, there may be a case where the polycarbonate resin cannot be used for a purpose for which the surface hardness is required.

Moreover, in the method of coating an acrylic resin on a surface layer, since surface hardness is improved to a certain extent, it may have a wide application range such as a front plate for information display equipment. However, this method involves a two-layer structure consisting of two different materials, and thus, due to a difference in water absorption properties between an acrylic resin and a polycarbonate resin, warp is generated with environmental changes. Accordingly, this method is inconvenient for intended uses in which environmental changes are generated.

As a method of suppressing warp, there is a method of laminating an acrylic resin layer on both surfaces of a polycarbonate resin layer. However, when surface impact is given to one surface of the laminate, a crack is easily generated in the acrylic resin layer on the other surface, and thus, this method may be problematic for some usage.

Patent Literature 2 discloses, as a method of suppressing warp, a laminate, which is characterized in that a methyl methacrylate-styrene copolymer that is a resin having a water absorption percentage lower than that of an acrylic resin is laminated on a polycarbonate resin. However, the result 40°C/90% obtained in environmental testing is insufficient as conditions for high temperature and high humidity.

Patent Literature 3 discloses a laminate, which is characterized in that a high-hardness modified polycarbonate resin is laminated on a polycarbonate resin. However, Patent Literature 3 does not refer to water absorption properties and shape stability upon environmental changes.

### Prior Art Documents

### Patent Documents

Patent Literature 1: JP Patent Publication No. 2006-103169 A
Patent Literature 2: JP Patent Publication No. 2010-167659 A
Patent Literature 3: JP Patent Publication No. 2009-500195 A

### SUMMARY OF INVENTION

### TECHNICAL PROBLEM

It is an object of the present invention to provide a synthetic resin laminate for use in transparent substrate materials or transparent protective materials, which is excellent in terms of shape stability by which the laminate does not cause warp even in a high-temperature or high-humidity environment, surface hardness, and heat resistance.

### MEANS TO SOLVE THE PROBLEM

As a result of intensive studies directed towards achieving the aforementioned object, the present inventors have found that a synthetic resin laminate excellent in terms of shape stability or surface hardness can be obtained by laminating a resin composition formed by polymer-alloying i) 25% to 100% by mass of a specific styrene-unsaturated dicarboxylic acid copolymer consisting of 45% to 70% by mass of a styrene monomer unit, 10% to 30% by mass of an unsaturated dicarboxylic acid anhydride monomer unit, and 10% to 35% by mass of a vinyl monomer, and ii) 75% to 0% by mass of a resin comprising a vinyl monomer as a constitutional unit, on one surface of a base material layer comprising a polycarbonate as a main component, thereby completing the present invention.

Specifically, the present invention provides the following synthetic resin laminate and a transparent material comprising the synthetic resin laminate.

<1> A synthetic resin laminate, which is formed by laminating a resin layer (i.e., a high hardness layer) comprising a resin (A) containing a specific styrene-unsaturated dicarboxylic acid copolymer (a1) and a resin (a2) comprising a vinyl monomer as a constitutional unit on one surface of a resin layer (i.e., a base material layer) comprising a polycarbonate (B), wherein the synthetic resin laminate is characterized in that the copolymer (a1) is a styrene-unsaturated dicarboxylic acid copolymer consisting of 45% to 70% by mass of a styrene monomer unit, 10% to 30% by mass of an unsaturated dicarboxylic acid anhydride monomer unit, and 10% to 35% by mass of a vinyl monomer, and in that the ratio of the copolymer (a1) in the resin (A) is 25% to 100% by mass, and the ratio of the resin (a2) in the resin (A) is 75% to 0% by mass.
<2> The synthetic resin laminate according to the above <1>, which is characterized in that the vinyl monomer unit of the copolymer (a1) is a methyl methacrylate.
<3> The synthetic resin laminate according to the above <1> or <2>, which is characterized in that the resin (A) consists of 25% to 100% by mass of the styrene-based copolymer (a1) having a mass average molecular weight of 50,000 to 300,000 and 75% to 0% by mass of the methyl methacrylate resin (a2) having a mass average molecular weight of 50,000 to 500,000.
<4> The synthetic resin laminate according to any one of the above <1> to <3>, which is characterized in that the thickness of the resin layer comprising the resin (A) is 10 to 250 µm, the total thickness of the synthetic resin laminate is in the range of 0.1 to 2.0 mm, and the ratio of the thickness of the resin layer to the total thickness of the synthetic resin laminate is 0.01 to 0.5.
<5> The synthetic resin laminate according to any one of the above <1> to <4>, which is characterized in that the mass average molecular weight of the polycarbonate (B) is 25,000 to 75,000.
<6> The synthetic resin laminate according to any one of the above <1> to <5>, which is characterized in that the resin layer and/or the base material layer comprise an ultraviolet absorber.
<7> The synthetic resin laminate according to any one of the above <1> to <6>, wherein the surface of the resin layer comprising the resin (A) is subjected to a hard coating treatment.
<8> The synthetic resin laminate according to any one of the above <1> to <7>, wherein any one or more of an antireflection treatment, an antifouling treatment, an anti-fingerprint treatment, an antistatic treatment, a weather resistance treatment, and an anti-glare treatment are performed on one or both surfaces of the synthetic resin laminate.
<9> A transparent substrate material comprising the synthetic resin laminate according to any one of the above <1> to <8>.
<10> A transparent protective material comprising the synthetic resin laminate according to any one of the above <1> to <8>.
<11> A touch panel front-protecting plate comprising the synthetic resin laminate according to any one of the above <1> to <8>.
<12> A front plate for office automation equipment or portable electronic equipment, which comprises the synthetic resin laminate according to any one of the above <1> to <8>.

### EFFECT OF THE INVENTION

According to the present invention, a synthetic resin laminate, which is excellent in terms of shape stability, such as warp-preventing properties in a high-temperature or high-humidity environment, surface hardness, and/or impact resistance, is provided, and the synthetic resin laminate is used as a transparent substrate material or a transparent protective material. Specifically, the present synthetic resin laminate is preferably used in portable display devices such as mobile phone terminals, portable electronic playground equipment, portable information terminals or mobile PC, installation-type display devices such as liquid crystal monitors for laptop PC and desktop PC or liquid crystal televisions, etc., for example, as a front plate for protecting these devices.

### BEST MODES FOR CARRYING OUT THE INVENTION

Hereinafter, the present invention will be described in detail in production examples, examples, and the like, as described below. However, these production examples, examples, and the like are not intended to limit the scope of the present invention. In addition, the present invention can be carried out by any given modification methods, unless it largely deviates from the gist thereof.

The present invention relates to a synthetic resin laminate, which is formed by laminating a resin layer (i.e., a high hardness layer) comprising a resin (A) containing a resin composition formed by polymer-alloying 25% to 100% by mass of a specific styrene-unsaturated dicarboxylic acid copolymer (a1) and 75% to 0% by mass of a resin (a2) comprising a vinyl monomer as a constitutional unit, on one surface of a resin layer (i.e., a base material layer) comprising a polycarbonate (B), wherein the synthetic resin laminate is characterized in that the copolymer (a1) is a styrene-unsaturated dicarboxylic acid copolymer consisting of 45% to 70% by mass of a styrene monomer unit, 10% to 30% by mass of an unsaturated dicarboxylic acid anhydride monomer unit, and 10% to 35% by mass of a vinyl monomer, and in that the ratio of the copolymer (a1) in the resin (A) is 25% to 100% by mass, and the ratio of the resin (a2) in the resin (A) is 75% to 0% by mass.

### < Styrene-unsaturated dicarboxylic acid copolymer (a1) >

The copolymer (a1) used in the laminate of the present invention is a styrene copolymer consisting of 45% to 70% by mass of a styrene monomer unit, 10% to 30% by mass of an unsaturated dicarboxylic acid anhydride monomer unit, and 10% to 35% by mass of a vinyl monomer.

The styrene monomer is not particularly limited, and any given known styrene monomer can be used. From the viewpoint of easy availability, examples of the styrene monomer used herein include styrene, α-methylstyrene, o-methylstyrene, m-methylstyrene, p-methylstyrene, and t-butylstyrene. Among these, from the viewpoint of compatibility, styrene is particularly preferable. These styrene monomers may be used in combination of two or more types.

Examples of the unsaturated dicarboxylic acid anhydride monomer include acid anhydrides of maleic acid, itaconic acid, citraconic acid, and aconitic acid. From the viewpoint of compatibility with the vinyl monomer, maleic anhydride is preferable. These unsaturated dicarboxylic acid anhydride monomers may be used in combination of two or more types.

Examples of the vinyl monomer include vinyl monomers such as acrylonitrile, methacrylonitrile, acrylic acid, methyl acrylate, ethyl acrylate, n-butyl acrylate, 2ethylhexyl acrylate, methacrylic acid, methyl methacrylate, ethyl methacrylate, n-butyl methacrylate, and 2ethylhexyl methacrylate. From the viewpoint of compatibility with the vinyl monomer, methyl methacrylate (MMA) is preferable. These vinyl monomers may be used in combination of two or more types.

The weight average molecular weight of the styrene-unsaturated dicarboxylic acid copolymer (a1) is preferably 50,000 to 300,000, and more preferably 100,000 to 250,000. When the weight average molecular weight is 50,000 to 300,000, the styrene-unsaturated dicarboxylic acid copolymer (a1) has a high compatibility with the resin (a2) comprising a vinyl monomer and is excellent in terms of the effect of improving heat resistance. It is to be noted that the weight average molecular weight (Mw), number average molecular weight (Mn), and molecular weight distribution (Mw/Mn) of the styrene-unsaturated dicarboxylic acid copolymer (a1) can be measured by gel permeation chromatography using THF or chloroform as a solvent.

### < Resin (a2) comprising vinyl monomer >

Examples of the resin (a2) comprising a vinyl monomer used in the present invention include substances, which are formed by homopolymerization of vinyl monomers such as acrylonitrile, methacrylonitrile, acrylic acid, methyl acrylate, ethyl acrylate, n-butyl acrylate, 2ethylhexyl acrylate, methacrylic acid, methyl methacrylate, ethyl methacrylate, n-butyl methacrylate, and 2ethylhexyl methacrylate. In particular, methyl methacrylate is preferable as a monomer unit. In addition, a copolymer comprising two or more types of the aforementioned monomer units may also be used.

In the present invention, the weight average molecular weight of the resin (a2) comprising a vinyl monomer is determined based on the ease of mixing with (dispersion in) the styrene-unsaturated dicarboxylic acid copolymer (a1) and the ease of the production of the resin (A). That is to say, if the weight average molecular weight of the resin (a2) comprising a vinyl monomer is too large, problems occur, such that a difference in the melt viscosity between the copolymer (a1) and the resin (a2) becomes too large, and as a result, the mixing (dispersion) of the two components deteriorates, and the transparency of the resin (A) also deteriorates, or such that stable melting and kneading cannot be continuously carried out. In contrast, if the weight average molecular weight of the resin (a2) comprising a vinyl monomer is too small, another problem occurs such that the strength of the resin (A) is decreased, and as a result, the impact resistance of a synthetic resin laminate is also reduced. The weight average molecular weight of the resin (a2) comprising a vinyl monomer is preferably in the range of 50,000 to 700,000, more preferably in the range of 60,000 to 550,000. It is even more preferably in the range of 70,000 to 500,000.

### < Resin (A): mixture of styrene-unsaturated dicarboxylic acid copolymer (a1) and resin (a2) comprising vinyl monomer >

In the present invention, the composition ratio between the styrene-unsaturated dicarboxylic acid copolymer (a1) and the resin (a2) comprising a vinyl monomer is 0% to 75% by mass of the component (a2) to 100% to 25% by mass of the component (a1). The composition ratio is preferably 25% to 75% by mass of the component (a2) to 75% to 25% by mass of the component (a1). The composition ratio is more preferably 70% to 25% by mass of the component (a2) to 30% to 75% by mass of the component (a1). By setting the composition ratio in this range, a resin (A), which has a good balance in terms of various physical properties such as heat resistance, surface hardness and water absorption percentage, while maintaining transparency, can be obtained.

### < Polycarbonate (B) >

The polycarbonate (B) used in the present invention is not particularly limited, as long as it comprises a carbonic acid ester bond in a molecular main chain thereof, namely, comprises the unit -[O-R-OCO]-(wherein R comprises an aliphatic group, an aromatic group, or both of the aliphatic group and the aromatic group, and further has a linear structure or a branched structure). In particular, it is preferable to use a polycarbonate comprising a structural unit represented by the following formula [1]. Using such a polycarbonate, a resin laminate, which is excellent in terms of impact resistance, can be obtained.

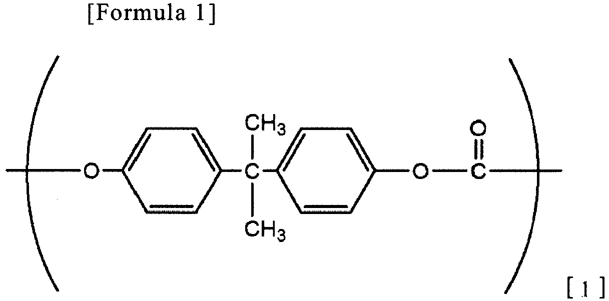

In the present invention, the weight average molecular weight of the polycarbonate (B) has an influence on the impact resistance of a synthetic resin laminate and molding conditions. That is, when the weight average molecular weight is too small, the impact resistance of the synthetic resin laminate is decreased, and thus it is not preferable. On the other hand, when the weight average molecular weight is too high, there may be a case where an excessive heat source is required upon lamination of the resin layer comprising the resin (A) (hereinafter also referred to as a "high hardness layer"), and thus, it is not preferable. Moreover, since a high temperature is required for some molding methods, in such a case, the resin (A) is exposed to a high temperature, and as a result, it may affect the heat stability of the synthetic resin laminate. The weight average molecular weight of the polycarbonate (B) is preferably 25,000 to 75,000, and more preferably 30,000 to 70,000. It is even more preferably 35,000 to 65,000.

### < Methods for producing various types of materials >

The method for forming the synthetic resin laminate of the present invention is not particularly limited. Examples of the method for forming the synthetic resin laminate of the present invention include various methods, such as a method which comprises laminating a high hardness layer with a base material layer comprising a polycarbonate (B), in which the two layers have been individually formed, and then subjecting the laminated layers to thermocompression bonding, a method which comprises laminating a high hardness layer with a base material layer, in which the two layers have been individually formed, and then adhering them to each other using an adhesive, a method of subjecting a resin (A) and a polycarbonate (B) to co-extrusion molding, and a method of subjecting a polycarbonate (B) to in-mold molding, using a high hardness layer that has previously been formed, and then integrating them. From the viewpoint of production costs and productivity, the method involving co-extrusion molding is preferable.

The method for producing the polycarbonate (B) used in the present invention can be selected, as appropriate, from known methods such as a phosgene method (an interfacial polymerization method) and a transesterification method (a melting method), depending on the type of a monomer used.

In the present invention, the method for producing the resin (A) is not particularly limited, and there can be applied a known method, such as a method which comprises previously mixing necessary components using a mixing machine such as a tumbler, a Henschel mixer or a Super mixer, and then melting and kneading the obtained mixture using a machine such as a Banbury mixer, a roll, a Brabender, a single-screw extruder, a twin-screw extruder or a pressure kneader.

### < Resin laminate >

In the present invention, the thickness of the high hardness layer has an influence on the surface hardness or impact resistance of the synthetic resin laminate. That is to say, if the thickness of the high hardness layer is too small, the surface hardness is reduced, and thus, it is not preferable. On the other hand, if the thickness of the high hardness layer is too large, the impact resistance deteriorates, and thus, it is not preferable. The thickness of the high hardness layer is preferably 10 to 250 µm, and more preferably 30 to 200 µm. It is even more preferably 60 to 150 µm.

In the present invention, the total thickness of the synthetic resin laminate (sheet) has an influence on the deformation amount (warp amount) of the synthetic resin laminate when exposed to high-temperature and high-humidity conditions, and impact resistance. That is, if the total thickness is too small, the deformation amount (warp amount) of the synthetic resin laminate is increased when it is exposed to high-temperature and high-humidity conditions, and impact resistance is reduced. When the total thickness is large, the deformation amount (warp amount) of the synthetic resin laminate is decreased when it is exposed to high-temperature and high-humidity conditions, and impact resistance is ensured. However, when the total thickness is unnecessarily large, an excessive amount of raw material must be used for the base material layer, and it is not economically efficient. The total thickness of the synthetic resin laminate is preferably 0.1 to 2.0 mm, and more preferably 0.3 to 2.0 mm. It is even more preferably 0.5 to 1.5 mm.

In the present invention, an ultraviolet absorber can be mixed into the high hardness layer and/or the base material layer, and the thus obtained layers can be used. If the content of such an ultraviolet absorber is too low, light resistance becomes insufficient. On the other hand, if the content is too high, an excessive amount of ultraviolet absorber may be scattered due to a high temperature, depending on a molding method, and thereby it may cause a problem regarding contamination of the molding environment. The content percentage of the ultraviolet absorber is preferably 0% to 5% by mass, more preferably 0% to 3% by mass, and even more preferably 0% to 1% by mass. Examples of the ultraviolet absorber include: benzophenone-based ultraviolet absorbers such as 2,4-dihydroxybenzophenone, 2-hydroxy-4-methoxybenzophenone, 2-hydroxy-4-n-octoxybenzophenone, 2-hydroxy-4-dodecyloxybenzophenone,
2-hydroxy-4-octadecyloxybenzophenone,
2,2'-dihydroxy-4-methoxybenzophenone, 2,2'-dihydroxy-4,4'-dimethoxybenzophenone, or 2,2',4,4'-tetrahydroxybenzophenone; benzotriazole-based ultraviolet absorbers such as 2-(2-hydroxy-5-methylphenyl)benzotriazole, 2-(2-hydroxy-3,5-di-t-butylphenyl)benzotriazole,
2-(2-hydroxy-3-t-butyl-5-methylphenyl)benzotriazole, or (2H-benzotriazol-2-yl)-4,6-bis(1-methyl-1-phenylethyl)phenol; benzoate-based ultraviolet absorbers such as phenyl salicylate or 2,4-di-t-butylphenyl-3,5-di-t-butyl-4-hydroxy benzoate; hindered amine-based ultraviolet absorbers such as bis(2,2,6,6-tetramethylpiperidin-4-yl) sebacate; and triazine-based ultraviolet absorbers such as 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, or 2,4-diphenyl-6-(2-hydroxy-4-benzyloxyphenyl)-1,3,5-triazine. The mixing method is not particularly limited, and a method of compounding the total amount of ultraviolet absorber, a method of dry-blending a master batch, a method of dry-blending the total amount of ultraviolet absorber, etc. can be used.

In the present invention, various types of additives can be mixed into the high hardness layer and/or the base material layer, and the thus obtained layers can be used. Examples of the additive include an antioxidant, an anti-coloring agent, an antistatic agent, a releasing agent, a lubricant, a dye, a pigment, a plasticizer, a flame retardant, a resin modifier, a compatibilizer, and a reinforcing material such as an organic filler or an inorganic filler. The mixing method is not particularly limited, and a method of compounding the total amount of additives, a method of dry-blending a master batch, a method of dry-blending the total amount of additives, etc. can be used.

In the present invention, a hard coating treatment may be performed on the surface of the side of the high hardness layer comprising the resin (A), or on the surface of the side of the base material layer. For example, a hard-coated layer is formed by performing a hard coating treatment using a hard coating paint that is hardened using heat energy or light energy. Examples of the hard coating paint hardened using heat energy include polyorganosiloxane-based and crosslinked acryl-based thermosetting resin compositions. An example of the hard coating paint hardened using light energy is a light-setting resin composition formed by adding a photopolymerization initiator to a resin composition consisting of a monofunctional and/or polyfunctional acrylate monomer and/or oligomer.

In the present invention, an example of the hard coating paint hardened using heat energy, which is applied onto the high hardness layer, is a thermosetting resin composition, which is formed by adding 1 to 5 parts by mass of amine carboxylate and/or quaternary ammonium carboxylate to 100 parts by mass of a resin composition consisting of 100 parts by mass of organotrialkoxysilane and 50 to 200 parts by mass of a colloidal silica solution comprising 10% to 50% by mass of colloidal silica having a particle diameter of 4 to 20 nm

In the present invention, an example of the hard coating paint hardened using light energy, which is applied onto the high hardness layer, is a light-setting resin composition, which is formed by adding 1 to 10 parts by mass of a photopolymerization initiator to 100 parts by mass of a resin composition consisting of 40% to 80% by mass of tris (acro carboxyethyl) isocyanurate and 20% to 60% by mass of a bifunctional and/or trifunctional (meth)acrylate compound copolymerizable with the tris (acro carboxyethyl) isocyanurate.

An example of the hard coating paint hardened using light energy, which is applied onto the base material layer in the present invention, is a light-setting resin composition, which is formed by adding 1 to 10 parts by mass of a photopolymerization initiator to 100 parts by mass of a resin composition that consists of 20% to 60% by mass of 1,9-nonanediol diacrylate, and 40% to 80% by mass of a compound consisting of a bi- or more-functional polyfunctional (meth)acrylate monomer and a bi- or more-functional polyfunctional urethane (meth)acrylate oligomer and/or a bi- or more-functional polyfunctional polyester (meth)acrylate oligomer and/or a bi- or more-functional polyfunctional epoxy (meth)acrylate oligomer, which are copolymerizable with the 1,9-nonanediol diacrylate.

The method of applying a hard coating paint to the layer is not particularly limited in the present invention, and a known method can be used. Examples of such a known method include a spin-coating method, a dipping method, a spraying method, a slide coating method, a bar coating method, a roll coating method, a gravure coating method , a meniscus coating method, a flexographic printing method, a screen printing method, a beat coating method, and a brushing method.

For the purpose of improving adhesiveness obtained by hard coating, before the hard coating treatment, a pre-treatment may be performed on a surface to be coated. Examples of such a pre-treatment include known methods such as a sandblasting method, a solvent treatment method, a corona discharge treatment method, a chromic acid treatment method, a flame treatment method, a hot air treatment method, an ozone treatment method, an ultraviolet treatment method, and a primer treatment method using a resin composition.

The material used for each of the high hardness layer, the base material layer and the hard-coated layer in the present invention is preferably subjected to filtration purification involving a filter treatment. By purifying or laminating the material through a filter, a synthetic resin laminate having a few cases of poor appearance, such as foreign matters or defects, can be obtained. The filtration method is not particularly limited, and melt filtration, solution filtration, a combination thereof, or the like can be used.

The used filter is not particularly limited, and a known filter can be used. Such a filter can be used, as appropriate, depending on the used temperature, viscosity and filtration accuracy of each material. The material used for the filter is not particularly limited, and polypropylene, cotton, polyester, non-woven fabric of viscose rayon or glass fiber, roving yarn scroll, phenol resin-impregnated cellulose, metal fiber non-woven fabric sintered body, breaker plate, and a combination thereof, can be all used. In particular, taking into consideration heat resistance, durability and pressure resistance, a metal fiber non-woven fabric sintered type is preferable.

The filtration accuracy of the resin (A) and the polycarbonate (B) is 50 µm or less, preferably 30 µm or less, and more preferably 10 µm or less. In addition, since a hard coating agent is applied onto the outermost layer of the synthetic resin laminate, the filtration accuracy thereof is 20 µm or less, preferably 10 µm or less, and more preferably 5 µm or less.

For filtration of the resin (A) and the polycarbonate (B), it is preferable to use, for example, a polymer filter that is used for the melt filtration of a thermoplastic resin. The polymer filter is classified into a leaf disk filter, a candle filter, a pack disk filter, a cylindrical filter, etc., depending on the structure thereof. A leaf disk filter having a large effective filtration area is particularly preferable.

Any one or more of an antireflection treatment, an antifouling treatment, an antistatic treatment, a weather resistance treatment and an anti-glare treatment can be performed on one surface or both surfaces of the synthetic resin laminate of the present invention. The methods of the antireflection treatment, antifouling treatment, antistatic treatment, weather resistance treatment and anti-glare treatment are not particularly limited, and known methods can be applied. Examples of the method include a method of applying a reflection-reducing paint to the synthetic resin laminate, a method of depositing a dielectric thin film, and a method of applying an antistatic paint to the synthetic resin laminate.

### EXAMPLES

Hereinafter, the present invention will be specifically described in the following examples. However, these examples are not intended to limit the scope of the present invention.

The measurement of the physical properties of the laminated resins obtained in the production examples and evaluation of the synthetic resin laminates obtained in the examples and comparative examples were carried out as follows.

### < Weight average molecular weight >

On the basis of a calibration curve obtained by previously dissolving standard polystyrene in chloroform and then performing a measurement by gel permeation chromatography (GPC), a styrene-unsaturated dicarboxylic acid copolymer (a1), a resin (a2) comprising a vinyl monomer, and a polycarbonate resin (B) were also measured by GPC. The weight average molecular weights of individual resins, namely, a1, a2 and B, were calculated by making a comparison between two components, namely, between the standard polystyrene and a1, between the standard polystyrene and a2, and between the standard polystyrene and B. In all cases, the obtained value indicates a value relative to polystyrene.

The GPC apparatus has the following configuration.
Apparatus: Wates 2690
Column: Shodex GPC KF-805L, 8ϕ × 300 mm, two columns connected
Developing solvent: Chloroform
Flow rate: 1 ml/min
Temperature: 30°C
Detector: UV ... 486 nm Polycarbonate (B)
   RI ... Styrene-unsaturated dicarboxylic acid copolymer (a1) and resin (a2) comprising vinyl monomer

### < Water absorption percentage >

Water absorption percentage was measured in accordance with Method A of JIS-K7209. First, a test piece with a size of 60 mm × 60 mm × 1.0 mm was prepared by press molding, and it was placed in an oven of 50°C and was then dried. Twenty-four hours later, the test piece was removed from the oven, and was then cooled in a desiccator whose temperature had been adjusted to 23°C. One hour later, the weight of the test piece was measured, and was then placed into water of 23°C. Then, 480 hours later, the test piece was removed from the water, and water on the surface was wiped out. Thereafter, the weight of the test piece was measured. A difference between the weight of the test piece after placing into water and the weight thereof immediately after drying was divided by the weight thereof immediately after drying, and the obtained value was multiplied by 100, thereby calculating a water absorption percentage.

### < High-temperature and high-humidity exposure test >

A test piece was cut to a rectangle with a size of 10 cm × 6 cm. The test piece was set into a two-point supporting type holder, and it was then placed in an environmental testing machine, in which the temperature was set at 23°C and the relative humidity was set at 50%, for 24 hours or more, so that the conditions were adjusted. Thereafter, warp was measured (before treatment). Subsequently, the test piece was set into the holder, and was then placed in an environmental testing machine, in which the temperature was set at 85°C and the relative humidity was set at 85%. The test piece was retained in that state for 120 hours. Thereafter, the test piece, together with the holder, was transferred into an environmental testing machine, in which the temperature was set at 23°C and the relative humidity was set at 50%, and it was then retained in that state for 4 hours. After that, warp was measured again (after treatment). For the measurement of warp, a three-dimensional shape measuring device equipped with an electric stage was used, and the removed test piece was horizontally placed on the measuring device in a convex state. Scanning was performed at intervals of 1 mm, and a raised portion in the center of the test piece was measured as a warp. A shape change amount was measured by the formula: (warp amount after the treatment) - (warp amount before the treatment), and shape stability was then evaluated.

### < Pencil scratch hardness test >

A pencil was pressed against the surface of the resin (A) at an angle of 45 degrees at a load of 750 g, while increasing the hardness thereof, in accordance with JIS K 5600-5-4. The highest hardness of the pencil, with which the surface was not damaged, was defined as a pencil hardness, and it was used for evaluation.

< Measurement of glass-transition temperature >

Using a differential scanning calorimeter, Pyris type 1, manufactured by Perkin Elmer, a sample was retained in a nitrogen atmosphere at 25°C for 1 minute, and a measurement was then carried out at a temperature-increasing rate of 10°C/min. An intersection point of two tangents in a DSC curve obtained using a tangent method was defined as a glass-transition temperature. A glass-transition temperature of 110°C or higher was evaluated as satisfactory.

### < Examples of various types of materials >

Examples of the resin A and the polycarbonate resin B include the following materials, but the examples are not limited thereto.
A1: Styrene-unsaturated dicarboxylic acid copolymer; KX-378 manufactured by Denka Company Limited
A2: Styrene-unsaturated dicarboxylic acid copolymer; KX-381 manufactured by Denka Company Limited
A3: Resin comprising a vinyl monomer; a methyl methacrylate resin, PARAPET HR-L, manufactured by Kuraray Co., Ltd.
A4: Resin comprising a vinyl monomer; Atoglas HT121 manufactured by ARKEMA
A5: Resin comprising a vinyl monomer; MS 800 manufactured by Nippon Steel Chemical Co., Ltd.
B1: Polycarbonate resin; Iupilon S-1000 manufactured by Mitsubishi Engineering-Plastics Corporation

### Production Example 1 [Production of resin (A11) pellets]

25% by mass of a styrene-unsaturated dicarboxylic acid copolymer (a1) that was KX-378 (manufactured by Denka Co., Ltd.; weight average molecular weight: 170,000; a styrene monomer : an unsaturated dicarboxylic acid anhydride monomer : a vinyl monomer (b1 : b2 : b3) = 65 : 15 : 20), 75% by mass of a methyl methacrylate resin used as a resin (a2) comprising a vinyl monomer as a constitutional unit that was PARAPET HR-L (manufactured by Kuraray Co., Ltd.), a 500 ppm phosphorus-based additive PEP36 (manufactured by ADEKA), and 0.2% stearic acid monoglyceride (product name: H-100, manufactured by Riken Vitamin Co., Ltd.) were mixed with one another using a blender for 20 minutes. Thereafter, using a twin-screw extruder with a screw diameter of 26 mm, the reaction mixture was melted and kneaded at a cylinder temperature of 260°C, and was then extruded into a strand form. Using a pelletizer, the resultant was processed into pellets. The pellets could be stably produced.

The thus produced pellets were transparent, the glass-transition temperature was 110°C, and the water absorption percentage was 0.9%.

### Production Example 2 [Production of resin (A 12) pellets]

50% by mass of the styrene-unsaturated dicarboxylic acid copolymer KX-378 used in Production Example 1 was mixed with 50% by mass of the methyl methacrylate resin PARAPET HR-L used in Production Example 1, to produce pellets. Pelletizing was carried out under the same conditions as those of Production Example 1. The pellets could be stably produced.

The thus produced pellets were transparent, the glass-transition temperature was 118°C, and the water absorption percentage was 0.7%.

### Production Example 3 [Production of resin (A13) pellets]

75% by mass of the styrene-unsaturated dicarboxylic acid copolymer KX-378 used in Production Example 1 was mixed with 25% by mass of the methyl methacrylate resin PARAPET HR-L used in Production Example 1, to produce pellets. Pelletizing was carried out under the same conditions as those of Production Example 1. The pellets could be stably produced.

The thus produced pellets were transparent, the glass-transition temperature was 121°C, and the water absorption percentage was 0.6%.

### Production Example 4 [Production of resin (A14) pellets]

25% by mass of a styrene-unsaturated dicarboxylic acid copolymer KX-381 (manufactured by Denka Co., Ltd.; weight average molecular weight: 185,000; b1 : b2 : b3 = 55 : 20 : 25), 75% by mass of a methyl methacrylate resin that was PARAPET HR-L, a 500 ppm phosphorus-based additive PEP36 (manufactured by ADEKA), and 0.2% stearic acid monoglyceride (product name: H-100, manufactured by Riken Vitamin Co., Ltd.) were mixed with one another using a blender for 20 minutes. Thereafter, using a twin-screw extruder with a screw diameter of 26 mm, the reaction mixture was melted and kneaded at a cylinder temperature of 260°C, and was then extruded into a strand form. Using a pelletizer, the resultant was processed into pellets. The pellets could be stably produced.

The thus produced pellets were transparent. The glass-transition temperature was 114°C, the water absorption percentage was 0.9%, and the pencil hardness was 2H.

### Production Example 5 [Production of resin (A 15) pellets]

50% by mass of a styrene-unsaturated dicarboxylic acid copolymer (a1: B in Table 1 as shown later) that was KX-381 (manufactured by Denka Co., Ltd.; weight average molecular weight: 185,000; b1 : b2 : b3 = 55 : 20 : 25), 75% by mass of a methyl methacrylate resin (a2: A in Table 1 as shown later) that was PARAPET HR-L, a 500 ppm phosphorus-based additive PEP36 (manufactured by ADEKA), and 0.2% stearic acid monoglyceride (product name: H-100, manufactured by Riken Vitamin Co., Ltd.) were mixed with one another using a blender for 20 minutes. Thereafter, using a twin-screw extruder with a screw diameter of 26 mm, the reaction mixture was melted and kneaded at a cylinder temperature of 260°C, and was then extruded into a strand form. Using a pelletizer, the resultant was processed into pellets. The pellets could be stably produced.

The thus produced pellets were transparent. The glass-transition temperature was 121°C, the water absorption percentage was 0.8%, and the pencil hardness was H.

### Production Example 6 [Production of resin (A16) pellets]

75% by mass of a styrene-unsaturated dicarboxylic acid copolymer (a1: B in Table 1 as shown later) that was KX-381 (manufactured by Denka Co., Ltd.; weight average molecular weight: 185,000; b1 : b2 : b3 = 55 : 20 : 25), 25% by mass of a methyl methacrylate resin (a2: A in Table 1 as shown later) that was PARAPET HR-L, a 500 ppm phosphorus-based additive PEP36 (manufactured by ADEKA), and 0.2% stearic acid monoglyceride (product name: H-100, manufactured by Riken Vitamin Co., Ltd.) were mixed with one another using a blender for 20 minutes. Thereafter, using a twin-screw extruder with a screw diameter of 26 mm, the reaction mixture was melted and kneaded at a cylinder temperature of 260°C, and was then extruded into a strand form. Using a pelletizer, the resultant was processed into pellets. The pellets could be stably produced.

The thus produced pellets were transparent. The glass-transition temperature was 127°C, the water absorption percentage was 0.7%, and the pencil hardness was H.

### Production Example 7 [Production of resin (A17) pellets]

50% by mass of a styrene-unsaturated dicarboxylic acid copolymer that was KX-381 (manufactured by Denka Co., Ltd.; weight average molecular weight: 185,000; b1 : b2 : b3 = 55 : 20 : 25), 50% by mass of a methyl methacrylate-styrene resin that was Estyrene MS 800 (manufactured by Nippon Steel Chemical Co., Ltd.), a 500 ppm phosphorus-based additive PEP36 (manufactured by ADEKA), and 0.2% stearic acid monoglyceride (product name: H-100, manufactured by Riken Vitamin Co., Ltd.) were mixed with one another using a blender for 20 minutes. Thereafter, using a twin-screw extruder with a screw diameter of 26 mm, the reaction mixture was melted and kneaded at a cylinder temperature of 260°C, and was then extruded into a strand form. Using a pelletizer, the resultant was processed into pellets. The pellets could be stably produced.

The thus produced pellets were transparent, the glass-transition temperature was 114°C, and the water absorption percentage was 0.5%.

### Production Example 9 [Production of light-setting resin composition (C11) to be coated on high hardness layer]

A composition consisting of 60 parts by mass of tris (2-carboxyethyl) isocyanurate (manufactured by Aldrich), 40 parts by mass of neopentyl glycol oligoacrylate (manufactured by Osaka Organic Chemical Industry Ltd., trade name: 215D), 1 part by mass of 2,4,6-trimethylbenzoyldiphenylphosphine oxide (manufactured by Ciba Japan, trade name: DAROCUR TPO), 0.3 parts by mass of 1-hydroxycyclohexyl phenyl ketone (manufactured by Aldrich) and 1 part by mass of 2-(2H-benzotriazol-2-yl)-4,6-bis(1-methyl-1-phenylethyl)phenol (manufactured by Ciba Japan, trade name: TINUVIN 234) was introduced into a mixing tank equipped with an impeller. Thereafter, the composition was stirred for 1 hour, while the temperature was kept at 40°C, to obtain a light-setting resin composition (C11: see Table 2 as shown later).

### Production Example 10 [Production of light-setting resin composition (C12) to be coated on base material layer]

A composition consisting of 40 parts by mass of 1,9-nonanediol diacrylate (manufactured by Osaka Organic Chemical Industry Ltd., trade name: Viscoat #260), 40 parts by mass of a hexafunctional urethane acrylate oligomer (manufactured by Shin-Nakamura Chemical Co., Ltd., trade name: U-6HA), 20 parts by mass of a condensate, in which the molar ratio of succinic acid/trimethylolethane/acrylic acid was 1/2/4, 2.8 parts by mass of 2,4,6-trimethylbenzoyldiphenylphosphine oxide (manufactured by Ciba Japan, trade name: DAROCUR TPO), 1 part by mass of benzophenone (manufactured by Aldrich) and 1 part by mass of 2-(2H-benzotriazol-2-yl)-4,6-bis(1-methyl-1-phenylethyl)phenol (manufactured by Ciba Japan, trade name: TINUVIN 234) was introduced into a mixing tank equipped with an impeller. Thereafter, the composition was stirred for 1 hour, while the temperature was kept at 40°C, to obtain a light-setting resin composition (C12).

### Comparative Production Example 1 [Production of resin (D11) pellets]

10% by mass of a styrene-unsaturated dicarboxylic acid copolymer that was KX-378 (manufactured by Denka Co., Ltd.; weight average molecular weight: 170,000; b1 : b2 : b3 = 65 : 15 : 20), 90% by mass of a methyl methacrylate-styrene resin that was PARAPET HR-L (manufactured by Kuraray Co., Ltd.), a 500 ppm phosphorus-based additive PEP36 (manufactured by ADEKA), and 0.2% stearic acid monoglyceride (product name: H-100, manufactured by Riken Vitamin Co., Ltd.) were mixed with one another using a blender for 20 minutes. Thereafter, using a twin-screw extruder with a screw diameter of 26 mm, the reaction mixture was melted and kneaded at a cylinder temperature of 260°C, and was then extruded into a strand form. Using a pelletizer, the resultant was processed into pellets. The pellets could be stably produced.

The thus produced pellets were transparent, the glass-transition temperature was 100°C, and the water absorption percentage was 1.2%.

### Example 1

A synthetic resin laminate was molded using a multilayer extrusion apparatus having a single-screw extruder with a screw diameter of 40 mm, a single-screw extruder with a screw diameter of 75 mm and a multi-manifold die connecting with each extruder. The resin (A11) obtained in Production Example 1 was continuously introduced into the single-screw extruder with a screw diameter of 40 mm, and it was then extruded under conditions of a cylinder temperature of 240°C and a discharge rate of 4.0 kg/h. At the same time, a polycarbonate resin (B1: see Table 2) (manufactured by Mitsubishi Engineering-Plastics Corporation; trade name: Iupilon S-1000; the aromatic polycarbonate in the above formula [1]; mass average molecular weight: 33,000) was continuously introduced into the single-screw extruder with a screw diameter of 75 mm, and it was then extruded under conditions of a cylinder temperature of 270°C and a discharge rate of 63.0 kg/h. The resins extruded from individual extruders were laminated on each other in the multi-manifold, and the laminate was then extruded from a T die in the form of a sheet. Thereafter, the laminate was cooled, while a mirror surface thereof was transcribed with three mirror surface finishing rolls having temperatures of 130°C, 120°C and 190°C from the upstream side, thereby obtaining a laminate (E1) of the resin (A11) and the polycarbonate resin (B1). The total thickness of the obtained laminate was 1.0 mm, and the thickness of a layer consisting of the resin (A11) was 60 µm around the center thereof.

The result of the high-temperature and high-humidity exposure test was 200 µm, and the result of the pencil scratch hardness test was 2H.

### Example 2

Using a bar coater, the light-setting resin composition (C11) obtained in Production Example 9 was applied onto the high hardness layer of the laminate (E1) obtained in Example 1, which consisted of the resin (A11), so that the thickness of the coated film after completion of hardening became 3 to 8 µm. After that, the resultant was coated with a PET film, and they were then connected to each other by pressure bonding. Thereafter, using a bar coater, the light-setting resin composition (C12) obtained in Production Example 10 was applied onto the base material layer of the laminate, which consisted of the polycarbonate resin (B1), so that thickness of the coated film after completion of hardening became 3 to 8 µm. After that, the resultant was coated with a PET film, and they were then connected to each other by pressure bonding. Subsequently, using a conveyor equipped with a high-pressure mercury lamp having a light source distance of 12 cm and an output of 80 W/cm, ultraviolet light was applied to the laminate at a line speed of 1.5 m/min, so that the laminate was hardened. The PET films were removed from the laminate, so as to obtain a laminate (E2) comprising hard-coated layers consisting of the resin compositions (C11) and (C12), respectively, on the high hardness layer and base material layer thereof. The result of the high-temperature and high-humidity exposure test was 9 µm, and the result of the pencil scratch hardness test was 4H. A laminate (E2) comprising the resin (A11) and the polycarbonate resin (B1) was obtained in the same manner as that of Example 1, with the exceptions that the discharge rate of the 40-mm single-screw extruder was set at 7.0 kg/h, and that the discharge rate of the 75-mm single-screw extruder was set at 60.0 kg/h.

The total thickness of the obtained laminate was 1.0 mm, and the thickness of the high hardness layer consisting of the resin (A11) was 100 µm around the center thereof. The result of the high-temperature and high-humidity exposure test was 300 µm, and the result of the pencil scratch hardness test was 4H.

### Example 3

A laminate (E4) comprising the resin (A 12) and the polycarbonate resin (B1) was obtained in the same manner as that of Example 1, with the exception that the resin (A12) was used instead of the resin (A11). The total thickness of the obtained laminate was 1.0 mm, and the thickness of the high hardness layer consisting of the resin (A12) was 60 µm around the center thereof. The result of the high-temperature and high-humidity exposure test was 100 µm, and the result of the pencil scratch hardness test was H.

### Example 4

A laminate (E4) comprising the resin (A12) and the polycarbonate resin (B1) was obtained in the same manner as that of Example 3, with the exceptions that the discharge rate of the 40-mm single-screw extruder was set at 7.0 kg/h, and that the discharge rate of the 75-mm single-screw extruder was set at 60.0 kg/h. The total thickness of the obtained laminate was 1.0 mm, and the thickness of the high hardness layer consisting of the resin (A11) was 100 µm around the center thereof. The result of the high-temperature and high-humidity exposure test was 150 µm, and the result of the pencil scratch hardness test was 2H.

### Example 5

Using a bar coater, the light-setting resin composition (C11) obtained in Production Example 9 was applied onto the high hardness layer of the laminate (E4) obtained in Example 4, which consisted of the resin (A12), so that the thickness of the coated film after completion of hardening became 3 to 8 µm. After that, the resultant was coated with a PET film, and they were then connected to each other by pressure bonding. Thereafter, using a bar coater, the light-setting resin composition (C12) obtained in Production Example 10 was applied onto the base material layer of the laminate, which consisted of the polycarbonate resin (B1), so that thickness of the coated film after completion of hardening became 3 to 8 µm. After that, the resultant was coated with a PET film, and they were then connected to each other by pressure bonding. Subsequently, using a conveyor equipped with a high-pressure mercury lamp having a light source distance of 12 cm and an output of 80 W/cm, ultraviolet light was applied to the laminate at a line speed of 1.5 m/min, so that the laminate was hardened. The PET films were removed from the laminate, so as to obtain a laminate (E5) comprising hard-coated layers consisting of the resin compositions (C11) and (C12), respectively, on the high hardness layer and base material layer thereof. The result of the high-temperature and high-humidity exposure test was 200 µm, and the result of the pencil scratch hardness test was 4H.

### Example 6

A laminate (E6) comprising the resin (A13) and the polycarbonate resin (B1) was obtained in the same manner as that of Example 1, with the exception that the resin (A13) was used instead of the resin (A11). The total thickness of the obtained laminate was 1.0 mm, and the thickness of the high hardness layer consisting of the resin (A 12) was 60 µm around the center thereof. The result of the high-temperature and high-humidity exposure test was 90 µm, and the result of the pencil scratch hardness test was H.

### Example 7

A laminate (E7) comprising the resin (A14) and the polycarbonate resin (B1) was obtained in the same manner as that of Example 1, with the exception that the resin (A14) was used instead of the resin (A11). The total thickness of the obtained laminate was 1.0 mm, and the thickness of the high hardness layer consisting of the resin (A12) was 60 µm around the center thereof. The result of the high-temperature and high-humidity exposure test was 200 µm, and the result of the pencil scratch hardness test was 2H.

### Example 8

A laminate (E8) comprising the resin (A15) and the polycarbonate resin (B1) was obtained in the same manner as that of Example 1, with the exception that the resin (A15) was used instead of the resin (A11). The total thickness of the obtained laminate was 1.0 mm, and the thickness of the high hardness layer consisting of the resin (A12) was 60 µm around the center thereof. The result of the high-temperature and high-humidity exposure test was 120 µm, and the result of the pencil scratch hardness test was 2H.

### Example 9

Using a bar coater, the light-setting resin composition (C11) obtained in Production Example 9 was applied onto the high hardness layer of the laminate (E8) obtained in Example 8, which consisted of the resin (A15), so that the thickness of the coated film after completion of hardening became 3 to 8 µm. After that, the resultant was coated with a PET film, and they were then connected to each other by pressure bonding. Thereafter, using a bar coater, the light-setting resin composition (C12) obtained in Production Example 10 was applied onto the base material layer of the laminate, which consisted of the polycarbonate resin (B1), so that thickness of the coated film after completion of hardening became 3 to 8 µm. After that, the resultant was coated with a PET film, and they were then connected to each other by pressure bonding. Subsequently, using a conveyor equipped with a high-pressure mercury lamp having a light source distance of 12 cm and an output of 80 W/cm, ultraviolet light was applied to the laminate at a line speed of 1.5 m/min, so that the laminate was hardened. The PET films were removed from the laminate, so as to obtain a laminate (E9) comprising hard-coated layers consisting of the resin compositions (C11) and (C12), respectively, on the high hardness layer and base material layer thereof. The result of the high-temperature and high-humidity exposure test was 200 µm, and the result of the pencil scratch hardness test was 4H.

### Example 10

A laminate (E10) comprising the resin (A16) and the polycarbonate resin (B1) was obtained in the same manner as that of Example 1, with the exception that the resin (A16) was used instead of the resin (A11). The total thickness of the obtained laminate was 1.0 mm, and the thickness of the high hardness layer consisting of the resin (A12) was 60 µm around the center thereof. The result of the high-temperature and high-humidity exposure test was 100 µm, and the result of the pencil scratch hardness test was H.

### Example 11

A laminate (E11) comprising the resin (A18) and the polycarbonate resin (B1) was obtained in the same manner as that of Example 1, with the exception that the resin (A17) was used instead of the resin (A11). The total thickness of the obtained laminate was 1.0 mm, and the thickness of the high hardness layer consisting of the resin (A17) was 60 µm around the center thereof. The result of the high-temperature and high-humidity exposure test was 80 µm, and the result of the pencil scratch hardness test was 2H.

### Example 12

Using a bar coater, the light-setting resin composition (C11) obtained in Production Example 9 was applied onto the high hardness layer of the laminate (E11) obtained in Example 11, which consisted of the resin (A17), so that the thickness of the coated film after completion of hardening became 3 to 8 µm. After that, the resultant was coated with a PET film, and they were then connected to each other by pressure bonding. Thereafter, using a bar coater, the light-setting resin composition (C12) obtained in Production Example 10 was applied onto the base material layer of the laminate, which consisted of the polycarbonate resin (B1), so that thickness of the coated film after completion of hardening became 3 to 8 µm. After that, the resultant was coated with a PET film, and they were then connected to each other by pressure bonding. Subsequently, using a conveyor equipped with a high-pressure mercury lamp having a light source distance of 12 cm and an output of 80 W/cm, ultraviolet light was applied to the laminate at a line speed of 1.5 m/min, so that the laminate was hardened. The PET films were removed from the laminate, so as to obtain a laminate (E12) comprising hard-coated layers consisting of the resin compositions (C11) and (C12), respectively, on the high hardness layer and base material layer thereof. The result of the high-temperature and high-humidity exposure test was 150 µm, and the result of the pencil scratch hardness test was 3H.

### Example 13

A laminate (E13) comprising the resin (A1) and the polycarbonate resin (B1) was obtained in the same manner as that of Example 1, with the exception that the resin (A1) was used instead of the resin (A11). The total thickness of the obtained laminate was 1.0 mm, and the thickness of the high hardness layer consisting of the resin (A1) was 60 µm around the center thereof. The result of the high-temperature and high-humidity exposure test was 40 µm, and the result of the pencil scratch hardness test was H.

### Example 14

A laminate (E14) comprising the resin (A2) and the polycarbonate resin (B1) was obtained in the same manner as that of Example 1, with the exception that the resin (A2) was used instead of the resin (A11). The total thickness of the obtained laminate was 1.0 mm, and the thickness of the high hardness layer consisting of the resin (A2) was 60 µm around the center thereof. The result of the high-temperature and high-humidity exposure test was 80 µm, and the result of the pencil scratch hardness test was H.

### Example 15

Using a bar coater, the light-setting resin composition (C11) obtained in Production Example 9 was applied onto the high hardness layer of the laminate (E14) obtained in Example 14, which consisted of the resin (A2), so that the thickness of the coated film after completion of hardening became 3 to 8 µm. After that, the resultant was coated with a PET film, and they were then connected to each other by pressure bonding. Thereafter, using a bar coater, the light-setting resin composition (C12) obtained in Production Example 10 was applied onto the base material layer of the laminate, which consisted of the polycarbonate resin (B1), so that thickness of the coated film after completion of hardening became 3 to 8 µm. After that, the resultant was coated with a PET film, and they were then connected to each other by pressure bonding. Subsequently, using a conveyor equipped with a high-pressure mercury lamp having a light source distance of 12 cm and an output of 80 W/cm, ultraviolet light was applied to the laminate at a line speed of 1.5 m/min, so that the laminate was hardened. The PET films were removed from the laminate, so as to obtain a laminate (E15) comprising hard-coated layers consisting of the resin compositions (C11) and (C12), respectively, on the high hardness layer and base material layer thereof. The result of the high-temperature and high-humidity exposure test was 100 µm, and the result of the pencil scratch hardness test was 3H.

### Comparative Example 1

A laminate (F1) comprising the resin (A3) and the polycarbonate resin (B1) was obtained in the same manner as that of Example 1, with the exception that the resin (A3) was used instead of the resin (A11). The total thickness of the obtained laminate was 1.0 mm, and the thickness of the high hardness layer consisting of the resin (A3) was 60 µm around the center thereof. The result of the high-temperature and high-humidity exposure test was 1000 µm, and the result of the pencil scratch hardness test was 3H.

### Comparative Example 2

A laminate (F2) comprising the resin (A4) and the polycarbonate resin (B1) was obtained in the same manner as that of Example 1, with the exception that the resin (A4) was used instead of the resin (A11). The total thickness of the obtained laminate was 1.0 mm, and the thickness of the high hardness layer consisting of the resin (A4) was 60 µm around the center thereof. The result of the high-temperature and high-humidity exposure test was 1200 µm, and the result of the pencil scratch hardness test was 3H.

### Comparative Example 3

A laminate (F3) comprising the resin (A5) and the polycarbonate resin (B1) was obtained in the same manner as that of Example 1, with the exceptions that a methyl methacrylate-styrene copolymer (A5) (MS resin, manufactured by NIPPON STEEL & SUMIKIN CHEMICAL CO., LTD.; trade name: MS 800) was used instead of the resin (A11), and the polycarbonate (B1) (manufactured by Mitsubishi Engineering-Plastics Corporation; trade name: Iupilon S-1000; mass average molecular weight: 27,000) was used, that the cylinder temperature of a single-screw extruder with a screw diameter of 32 mm was set at 220°C, and that the roll temperatures were set at 130°C, 140°C and 190°C from the upstream. The total thickness of the obtained laminate was 1.0 mm, and the thickness of the high hardness layer consisting of the resin (A3) was 60 µm around the center thereof. Thereafter, a laminate (F4) comprising hard-coated layers consisting of the resin compositions (C11) and (C12), respectively, on the high hardness layer and base material layer of the laminate (F3) was obtained in the same manner as that of Example 3. The result of the high-temperature and high-humidity exposure test was 500 µm, and the result of the pencil scratch hardness test was 3H.

### Comparative Example 4

A laminate (F5) comprising (B1) and (B1) was obtained in the same manner as that of Example 1, with the exceptions that polycarbonate (B1) (manufactured by Mitsubishi Engineering-Plastics Corporation; trade name: Iupilon S-1000; mass average molecular weight: 27,000) was used instead of the resin (A11), that the cylinder temperature of a single-screw extruder with a screw diameter of 32 mm was set at 260°C, and that the roll temperatures were set at 130°C, 140°C and 190°C from the upstream. The total thickness of the obtained laminate was 1.0 mm, and the result of the pencil scratch hardness test was 2B. Thereafter, a laminate (F6) comprising hard-coated layers consisting of the resin compositions (C11) and (C12), respectively, on the laminate (F5) was obtained in the same manner as that of Example 3. The result of the high-temperature and high-humidity exposure test was 100 µm, and the result of the pencil scratch hardness test was HB.

### Comparative Example 5

A laminate (F7) comprising the resin (D11) and the polycarbonate resin (B1) was obtained in the same manner as that of Example 1, with the exception that the resin (D11) was used instead of the resin (A11). The total thickness of the obtained laminate was 1.0 mm, and the thickness of the high hardness layer consisting of the resin (D11) was 60 µm around the center thereof. The result of the high-temperature and high-humidity exposure test was 700 µm, and the result of the pencil scratch hardness test was 3H.

As described in the above examples and comparative examples, a resin laminate, which is formed by laminating a resin composition formed by polymer-alloying i) 25% to 100% by mass of a specific styrene-unsaturated dicarboxylic acid copolymer consisting of 45% to 70% by mass of a styrene monomer unit, 10% to 30% by mass of an unsaturated dicarboxylic acid anhydride monomer unit, and 10% to 35% by mass of a vinyl monomer, and ii) 75% to 0% by mass of a resin comprising a vinyl monomer as a constitutional unit, on one surface of a base material layer comprising a polycarbonate as a main component, has higher surface hardness and heat resistance, and also has higher dimensional stability in a high-temperature and high-humidity environment, in comparison to the resin laminates of the comparative examples, which are formed by laminating only a resin comprising a vinyl monomer as a constitutional unit on a base material layer comprising a polycarbonate resin as a main component.

As shown in Tables 1 and 2, it has been confirmed that the synthetic resin laminate of the present invention has a small shape change amount (warp amount) in a high-temperature or high-humidity environment, and thus, it is excellent in terms of shape stability, and is also excellent in terms of surface hardness, weather resistance and heat resistance.

**[Table 1]**

| Example | Produced resin | Resin comprising vinyl monomer (a2) | Styrene-unsaturned dicarboxylic acid copolymer (a1) | Glass-transition/ temperature (°C) | Water absorption/ percentage (%) | Production of pellets |
|---|---|---|---|---|---|---|
| | Symbol | [% by mass] | [% by mass] | DSC | JIS K7209,23°C in water for 24 hrs | |
| Production Example 1 | A11 | Methyl polymethacrylate: PARAPET HR-L [75%] | KX-378 [25%] | 110 | 0.9 | Possible |
| Production Example 2 | A12 | Methyl polymethacrylate: PARAPET HR-L [50%] | KX-378 [50%] | 118 | 0.7 | Possible |
| Production Example 3 | A13 | Methyl polymethacrylate: PARAPET HR-L [25%] | KX-378 [75%] | 121 | 0.6 | Possible |
| Production Example 4 | A14 | Methyl polymethacrylate: PARAPET HR-L [75%] | KX-381 [25%] | 114 | 0.9 | Possible |
| Production Example 5 | A15 | Methyl polymethacrylate: PARAPET HR-L [50%] | KX-381 [50%] | 121 | 0.8 | Possible |
| Production Example 6 | A16 | Methyl polymethacrylate: PARAPET HR-L [25%] | KX-381 [75%] | 127 | 0.7 | Possible |
| Production Example 7 | A17 | Methyl polymethacrylate-MS 800 [50%] | KX-381 [50%] | 114 | 0.5 | Possible |
| Comparative Production Example 1 | D11 | Methyl polymethacrylate: PARAPET HR-L [90%] | KX-378 [10%] | 107 | 1.3 | Possible |
| | A1 | - | KX-378 [100%] | 125 | 0.4 | Commercially available product |
| | A2 | - | KX-381 [100%] | 135 | 0.5 | Commercially available product |
| | A3 | Methyl polymethacrylate: PARAPET HR-L [100%] | - | 105 | 1.4 | Commercially available product |
| | A4 | Methyl polymethacrylate: Atoglas HT121 [100%] | - | 121 | 1.6 | Commercially available product |
| | A5 | Methyl polymethacrylate MS 800 [100%] | - | 100 | 1.1 | Commercially available product |

**[Table 2]**

| Example | Thickness [mm] of material (A) | Thickness [mm] of material (B) | Hard coating on surface (A) | Hard coating on surface (B) | Laminate | Shape stability under exposure to high temperature and high humidity [Shape change amount / µm] | Pencil hardness of surface (A) |
|---|---|---|---|---|---|---|---|
| Example 1 | A11 [60] | B1 [940] | - | - | E1 | 200 | 2H |
| Example 2 | A11 [60] | B1 [940] | C11 | C12 | E2 | 300 | 4H |
| Example 3 | A12 [60] | B1 [940] | - | - | E3 | 100 | H |
| Example 4 | A12 [100] | B1 [900] | - | - | E4 | 150 | H |
| Example 5 | A12 [100] | B1 [900] | C11 | C12 | E5 | 200 | 4H |
| Example 6 | A13 [60] | B1 [940] | - | - | E6 | 90 | H |
| Example 7 | A14 [60] | [940] | - | - | E7 | 200 | 2H |
| Example 8 | A15 [60] | B1 [940] | - | - | E8 | 120 | 2H |
| Example 9 | A15 [60] | B1 [940] | C11 | C12 | E9 | 200 | 4H |
| Example 10 | A16 [60] | B1 [940] | - | - | E10 | 100 | H |
| Example 11 | A17 [60] | B1 [940] | - | - | **E**11 | 80 | H |
| Example 12 | A17 [60] | B1 [940] | C11 | C12 | E12 | 150 | 3H |
| Example 13 | A1 [60] | B1 [940] | - | - | E13 | 40 | H |
| Example 14 | A2 [60] | B1 [940] | - | - | E14 | 80 | H |
| Example 15 | A2 [60] | B1 [940] | C11 | C12 | E15 | 100 | 4H |
| Comparative Example 1 | D11 [60] | B1 [940] | - | - | F1 | 1000 | 3H |
| Comparative Example 2 | A4 [60] | B1 [940] | - | - | F2 | 1200 | 3H |
| Comparative Example 3 | A5 [60] | B1 [940] | C11 | C12 | F3 | 500 | 3H |
| Comparative Example 4 | B1 [60] | B1 [940] | - | - | F4 | 100 | HB |
| Comparative Example 5 | D11 [60] | B1 [940] | - | - | F5 | 700 | 3H |

### INDUSTRIAL APPLICABILITY

The synthetic resin laminate of the present invention has characteristics in that it is excellent in terms of shape stability such as warp-preventing properties in a high-temperature or high-humidity environment, surface hardness, impact resistance, weather resistance, and heat resistance, and thus, the present synthetic resin laminate is preferably used as a transparent substrate material, a transparent protective material, etc., and is particularly preferably used as a front plate for the display of office automation equipment or portable electronic equipment, a touch panel substrate, and further, a sheet for hot bending.

## Claims

1. A synthetic resin laminate, which is formed by laminating a resin layer, which is a high hardness layer, comprising a resin (A) containing a specific styrene-unsaturated dicarboxylic acid copolymer (a1) and a resin (a2) comprising a vinyl monomer as a constitutional unit on one surface of a resin layer, which is a base material layer, comprising a polycarbonate (B), wherein the synthetic resin laminate is **characterized in that** the copolymer (a1) is a styrene-unsaturated dicarboxylic acid copolymer consisting of 45% to 70% by mass of a styrene monomer unit, 10% to 30% by mass of an unsaturated dicarboxylic acid anhydride monomer unit, and 10% to 35% by mass of a vinyl monomer, and **in that** the ratio of the copolymer (a1) in the resin (A) is 25% to 100% by mass, and the ratio of the resin (a2) in the resin (A) is 75% to 0% by mass.

2. The synthetic resin laminate according to claim 1, which is **characterized in that** the vinyl monomer unit of the copolymer (a1) is a methyl methacrylate.

3. The synthetic resin laminate according to claim 1 or claim 2, which is **characterized in that** the resin (A) consists of 25% to 100% by mass of the styrene-based copolymer (a1) having a mass average molecular weight of 50,000 to 300,000 and 75% to 0% by mass of the methyl methacrylate resin (a2) having a mass average molecular weight of 50,000 to 500,000.

4. The synthetic resin laminate according to any one of claim 1 to claim 3, which is **characterized in that** the thickness of the resin layer comprising the resin (A) is 10 to 250 µm, the total thickness of the synthetic resin laminate is in the range of 0.1 to 2.0 mm, and the ratio of the thickness of the resin layer to the total thickness of the synthetic resin laminate is 0.01 to 0.5.

5. The synthetic resin laminate according to any one of claim 1 to claim 4, which is **characterized in that** the mass average molecular weight of the polycarbonate (B) is 25,000 to 75,000.

6. The synthetic resin laminate according to any one of claim 1 to claim 5, which is **characterized in that** the resin layer and/or the base material layer comprise an ultraviolet absorber.

7. The synthetic resin laminate according to any one of claim 1 to claim 6, wherein the surface of the resin layer comprising the resin (A) is subjected to a hard coating treatment.

8. The synthetic resin laminate according to any one of claim 1 to claim 7, wherein any one or more of an antireflection treatment, an antifouling treatment, an anti-fingerprint treatment, an antistatic treatment, a weather resistance treatment, and an anti-glare treatment are performed on one or both surfaces of the synthetic resin laminate.

9. A transparent substrate material comprising the synthetic resin laminate according to any one of claims 1 to 8.

10. A transparent protective material comprising the synthetic resin laminate according to any one of claims 1 to 8.

11. A touch panel front-protecting plate comprising the synthetic resin laminate according to any one of claims 1 to 8.

12. A front plate for office automation equipment or portable electronic equipment, which comprises the synthetic resin laminate according to any one of claims 1 to 8.

## Patentansprüche

1. Syntheseharzlaminat, das gebildet ist durch Laminieren einer Harzschicht, die eine Schicht mit großer Härte ist, umfassend ein Harz (A), das ein spezifisches Styrol-ungesättigtes Dicarbonsäure-Copolymer (a1) und ein Harz (a2) enthält, das ein Vinylmonomer als Grundeinheit umfasst,
auf eine Oberfläche einer Harzschicht, die eine Basismaterialschicht ist, umfassend ein Polycarbonat (B),
worin das Syntheseharzlaminat **dadurch gekennzeichnet ist, dass** das Copolymer (a1) ein Styrol-ungesättigtes Dicarbonsäure-Copolymer ist, das aus 45 bis 75 Massen-% einer Styrol-Monomereinheit, 10 bis 30 Massen-% einer ungesättigten Dicarbonsäureanhydrid-Monomereinheit und 10 bis 35 Massen-% eines Vinylmonomers besteht, und dadurch, dass das Verhältnis des Copolymers (a1) im Harz (A) 25 bis 100 Massen-% beträgt und das Verhältnis des Harzes (a2) im Harz (A) 75 bis 0 Massen-% beträgt.

2. Syntheseharzlaminat gemäß Anspruch 1, **dadurch gekennzeichnet, dass** die Vinylmonomereinheit des Copolymers (a1) ein Methylmethacrylat ist.

3. Syntheseharzlaminat gemäß Anspruch 1 oder 2, **dadurch gekennzeichnet, dass** das Harz (A) aus 25 bis 100 Massen-% des Styrol-basierten Copolymers (a1), das ein gewichtsmittleres Molekulargewicht von 50.000 bis 300.000 aufweist, und 75 bis 0 Massen-% des Methylmethacrylat-Harzes (a2) bestehet, das ein gewichtsmittleres Molekulargewicht von 50.000 bis 500.000 aufweist.

4. Syntheseharzlaminat gemäß mindestens einem der Ansprüche 1 bis 3, **dadurch gekennzeichnet, dass** die Dicke der Harzschicht, die das Harz (A) umfasst, 10 bis 250 µm beträgt, die Gesamtdicke des Syntheseharzlaminats im Bereich von 0,1 bis 2,0 mm ist und das Verhältnis der Dicke der Harzschicht zur Gesamtdicke des Syntheseharzlaminats 0,01 bis 0,5 beträgt.

5. Syntheseharzlaminat gemäß mindestens einem der Ansprüche 1 bis 4, **dadurch gekennzeichnet, dass** das gewichtsmittlere Molekulargewicht des Polycarbonats (B) 25.000 bis 75.000 beträgt.

6. Syntheseharzlaminat gemäß mindestens einem der Ansprüche 1 bis 5, **dadurch gekennzeichnet, dass** die Harzschicht und/oder die Basismaterialschicht einen UV-Absorber umfasst.

7. Syntheseharzlaminat gemäß mindestens einem der Ansprüche 1 bis 6, worin die Oberfläche der Harzschicht, die das Harz (A) umfasst, einer Hartbeschichtungsbehandlung unterzogen wird.

8. Syntheseharzlaminat gemäß mindestens einem der Ansprüche 1 bis 7, worin irgendeines oder mehr aus einer Antireflexionsbehandlung, einer Anwuchsverhinderungsbehandlung, einer Anti-Fingerabdruckbehandlung, eine Antistatikbehandlung, eine Witterungsbeständigkeitsbehandlung und/oder eine Blendschutzbehandlung auf einer oder beiden Oberflächen des Syntheseharzlaminats durchgeführt werden.

9. Transparentes Substratmaterial, umfassend das Syntheseharzlaminat gemäß mindestens einem der Ansprüche 1 bis 8.

10. Transparentes Schutzmaterial, umfassend das Syntheseharzlaminat gemäß mindestens einem der Ansprüche 1 bis 8.

11. Touch Panel-Oberflächen-Schutzplatte, umfassend das Syntheseharzlaminat gemäß mindestens einem der Ansprüche 1 bis 8.

12. Frontplatte für Büroautomatisierungsgeräte oder tragbare elektronische Geräte, die das Syntheseharzlaminat gemäß mindestens einem der Ansprüche 1 bis 8 umfasst.

## Revendications

1. Stratifié de résine synthétique, qui est formé par stratification d'une couche de résine, qui est une couche de dureté élevée,
comprenant une résine (A) contenant un copolymère (a1) spécifique de styrène-acide dicarboxylique insaturé et une résine (a2) comprenant un monomère vinylique en tant qu'une unité constitutive sur une surface d'une couche de résine, qui est une couche de matière de base,
comprenant un polycarbonate (B), dans lequel le stratifié de résine synthétique est **caractérisé en ce que** le copolymère (a1) est un copolymère de styrène-acide dicarboxylique insaturé constitué de 45 % à 70 % en masse d'une unité monomère de styrène, de 10 % à 30 % en masse d'une unité monomère d'anhydride d'acide dicarboxylique insaturé, et de 10 % à 35 % en masse d'un monomère vinylique, et **en ce que** le rapport du copolymère (a1) dans la résine (A) est de 25 % à 100 % en masse, et le rapport de la résine (a2) dans la résine (A) est de 75 % à 0 % en masse.

2. Stratifié de résine synthétique selon la revendication 1, qui est **caractérisé en ce que** l'unité monomère vinylique du copolymère (a1) est un méthacrylate de méthyle.

3. Stratifié de résine synthétique selon la revendication 1 ou 2, qui est **caractérisé en ce que** la résine (A) est constituée de 25 % à 100 % en masse du copolymère (a1) à base de styrène possédant un poids moléculaire moyen en masse de 50 000 à 300 000, et de 75 % à 0 % en masse de la résine (a2) de méthacrylate de méthyle possédant un poids moléculaire moyen en masse de 50 000 à 500 000.

4. Stratifié de résine synthétique selon l'une quelconque des revendications 1 à 3, qui est **caractérisé en ce que** l'épaisseur de la couche de résine comprenant la résine (A) est de 10 à 250 µm, l'épaisseur totale du stratifié de résine synthétique se situe dans la plage de 0,1 à 2,0 mm, et le rapport de l'épaisseur de la couche de résine à l'épaisseur totale du stratifié de résine synthétique est de 0,01 à 0,5.

5. Stratifié de résine synthétique selon l'une quelconque des revendications 1 à 4, qui est **caractérisé en ce que** le poids moléculaire moyen en masse du polycarbonate (B) est de 25 000 à 75 000.

6. Stratifié de résine synthétique selon l'une quelconque des revendications 1 à 5, qui est **caractérisé en ce que** la couche de résine et/ou la couche de matière de base comprennent un absorbeur d'ultraviolet.

7. Stratifié de résine synthétique selon l'une quelconque des revendications 1 à 6, dans lequel la surface de la couche de résine comprenant la résine (A) est soumise à un traitement de revêtement dur.

8. Stratifié de résine synthétique selon l'une quelconque des revendications 1 à 7, dans lequel un ou plusieurs d'un traitement antireflet, un traitement antisalissure, un traitement de lutte contre l'empreinte de doigts, un traitement antistatique, un traitement de résistance aux conditions atmosphériques et un traitement antiéblouissement sont mis en oeuvre sur une ou deux surfaces du stratifié de résine synthétique.

9. Matière transparente faisant office de substrat comprenant le stratifié de résine synthétique selon l'une quelconque des revendications 1 à 8.

10. Matière transparente de protection comprenant le stratifié de résine synthétique selon l'une quelconque des revendications 1 à 8.

11. Plaque de protection frontale pour un écran tactile comprenant le stratifié de résine synthétique selon l'une quelconque des revendications 1 à 8.

12. Plaque frontale pour un matériel de bureautique ou un équipement électronique portable, qui comprend le stratifié de résine synthétique selon l'une quelconque des revendications 1 à 8.
